# EUROPEAN PATENT APPLICATION

(11) **EP 1 721 530 A1**
(43) Date of publication of application: **15.11.2006**
(21) Application number: 05010190.6
(22) Date of filing: 11.05.2005
(51) Int. Cl.: A23J 3/26, A23L 1/22, A23J 3/10

(54) **Casein based puffed products, their preparation and their use in food products**

(71) Applicant: NESTEC S.A., 1800 Vevey (CH)
(72) Inventor: Bisson, Jean Pierre, F-14000 CAEN (FR); Carli, Sophie, F-14160 DIVES SUR MER (FR); Chanet, Benjamin, F-14000 CAEN (FR)
(74) Representative: Chautard, Cécile

(57) **Abstract**

Casein based puffed product comprise a matrix made of extruded and expanded casein salt and additional nutritional elements which are dispersed throughout the matrix mass; they can be used as mean or support for providing or delivering additional nutritional elements within said food products, for example as inclusions in food products such as dry food products like cereal flakes or bars, chocolate or confectionery, or wet food products such as ice-creams, milk based desserts or chilled dairy products like yogurts, curds or fresh cheese.

Process for their preparation and food products comprising said casein based puffed product.

## Description

### Field of the invention

The invention refers to the food industry, more specifically to casein based puffed products, their use as support or means for delivering nutritional elements within various food products, namely as inclusions within said food products and to their preparation as well.

### Background of the invention

The high nutritional value of milk or milk components is acknowledged since years if not centuries and milk based food products are quite numerous today. Milk powder, milk solids or milk components like whey powder, casein or lactose are also often used as raw material for preparing food products defined as snacks, in particular expanded snacks, food inclusions or food additives.

WO 03/030659 discloses an extruded-expanded milk based snack product which may be coated with sugar or fat, ideally with coating further comprising milk solids; such snack products which also comprise a starch-based material exhibit a porous and crunchy texture as well as a smooth and melt-in-mouth texture which can be desirable in some instances.

In order to increase the protein content of such expanded snack products, consequently to increase their nutritional value, one can use casein or casein derivatives such as caseinate salts as starting material. According to EP 202484 one uses rennet-type casein as provided e.g. in cheese manufacture, submitting this material to an extrusion while being conveniently moisturized and eventually expanded under vacuum.

According to EP 393339 one uses acidic casein which has a relatively high total dry mass and submit this material to extrusion in the presence of adequate proportions of an alkali or alkaline earth metal salt or ammonia; the so extruded material is then expanded.

Today, modern diet guidelines recommend adjusting, if not to increase the content of micronutrients in many food products offer for consumption, e.g. to enrich them in valuable nutritional elements like vitamins or minerals. WO/030659 suggests adding said nutritional elements to expanded milk based snacks by means of an outer coating or a filling.

When micronutrients are sensitive to heat, moisture or oxidation the current techniques consist to apply additional coating steps, mainly by spreading or spraying additional fat or sugar based coating material onto the outer surface of the snack product. A consequence of that is an extension of the manufacture process, may be a corresponding increase of manufacture costs and, when considering the nutritional aspect of the end material, a less attractive protein / fat or sugar ration, i.e. a sometimes significant decrease of the nutritional value of the end material.

The present invention obviates these types of drawbacks while proposing casein based puffed (expanded) products which comprise additional valuable nutritional elements dispersed throughout the entire expanded matrix mass.

### Summary of the invention

A first object of the invention is casein based puffed product comprising a matrix made of extruded and expanded casein salt and additional nutritional elements which are dispersed throughout the matrix mass.

A second object of the invention is a process for preparing such casein based puffed products using "precaseinate salt" as starting material.

An other object of the invention consists to use said casein based puffed products as mean or support for providing or delivering additional nutritional elements within food products, respectively as inclusions in said food products.

Yet another object of the invention is a food product which comprises as inclusions casein based puffed products as referred to here above.

### Detailed description of the invention

According to the invention the casein based puffed products contemplated within that frame are prepared by means of a process which comprises the steps of:
- preparing a casein alkali or alkaline earth metal salt by dry mixing acidic casein with a source of alkali or alkaline earth metal;
- concomitantly or subsequently mixing selected additional nutritional elements with the above ingredients;
- subjecting the resulting mixture to extrusion in controlled heat and pressure conditions and in the presence of a controlled amount of water
- subjecting the resulting extruded mass to expansion.
- subjecting the resulting extruded mass to a fluidized bed drying and if necessary, to a coating operation.

The term acidic casein covers both the traditional acidic casein directly obtained by acidification of milk and casein obtained indirectly, such as for example re-acidified rennet casein, i.e. rennet casein freed from most of its calcium by liberal washing with acid. Casein may be present in various states of hydration. Usually, in the form in which it is industrially obtained by spray-drying, it contains approximately 10% by weight water.

The second ingredient can be selected among alkali and alkaline earth metal hydroxides, mineral or organic salts of alkali and alkaline earth metals and amines or ammonia Preferred salts are sodium or calcium carbonates.

The mixing of the duly selected ingredients, in their powder form, is performed by simple, but careful dry mixing by means of the currently available techniques, like e.g. drum mixing or fluidized bed mixing; in order to achieve an homogenous dispersion of the additional nutritional elements throughout the expanded matrix mass, a special attention is devoted to the adjustment and control of the density of the various ingredients used as well as their size distribution. The best performance is achieved when the density of the expanded stuff is within the range of about 50 to 500 g / liter as measured using a specific apparatus supplied by AMAP S.A CH 1400 Yverdon-les-Bains).

The density of the reactants as measured after tamping, i.e. the specific gravity obtained after 300 beats, is comprised preferably between 0.6 and 1.3. Their particle size distribution is preferably below 850 pm and more particularly comprised within a range of about 50 to 500 pm.

The quantity in which the compound of basic reaction is used is 0.5 to 10% by weight and preferably 2 to 5% by weight, based on the mixture of reactants, whereas the relative proportion of the additional nutritional elements is essentially determined according to its nature (vitamin, minerals, essential fatty acids ...), its nutritional value or in line with current food regulations.

The dry mixture is then extruded under controlled heat and pressure conditions, more particularly while performing the said extrusion at pH and heat conditions sufficient to plasticize casein, namely at a pH of about 5.2 to 5.6 and at a temperature comprised between about 30 and 100 ° C, preferably at a temperature of about 60 to 70 °C; the amount of water present during extrusion has to be sufficient to afford a dry matter content of about 80 to 90 % of the resulting extruded product.

A final fluidized bed drying is carried out in order to obtain a final dry matter compatible with the usual preservation standard (92-97 %).

It has been observed that such conditions do not impair the nature and the activity of the additional nutritional elements even if some of them are recognized as sensitive to heat or moisture.

The subsequent expansion of the extruded product can be carried out using usual food technology as disclosed e.g. in EP 202484 or EP 39333. Accordingly, the extruded mass can be broken, sliced or ground into smaller portions or pieces prior to expansion or, also, the expanded and subsequently expanded mass is broken, sliced or ground into smaller portions or pieces. For example, the selected mixture of ingredients can be extruded under controlled conditions into a vacuum chamber in the presence of 6 to 20% by weight water to form expanded granules. The extrusion may also be performed without vacuum.

The additional nutritional elements which are used within the frame of this invention can be selected form the group consisting of bioactive compounds such as vitamins, polyunsaturated fatty acids, essential oils, antioxidants or the like, or micronutrients like minerals and oligoelements.

In a preferred embodiment of the invention sensitive additional nutritional elements are conveniently protected against e.g. heat, moisture, oxidation or light by means of a suitable mono- or multilayer coating, in particular by means of a coating of the whole matrix mass.

According the invention the said coating is performed in two subsequent steps, the first one comprising the use of a first fat based material and the second step comprising a further coating making use of the same fat based material or a distinct material, e.g. vegetable fat, chocolate, natural or artificial wax; whenever desirable the second step of the coating operation enables the addition of further additives like colorants, flavors, stabilizers or the like.

An additional advantage of such coating operation is to preserve the initial crispy or crunchy texture of the expanded, i.e. porous casein based matrix especially when exposed to extend storage periods in humid conditions or when mixed with wet food products like chilled dairy food products.

Still a further advantage of the invention is to provide casein based puffed products acting as mean or support for providing or delivering the additional nutritional elements mentioned here above within selected food products, especially sensitive elements having high nutritional value like e.g. iron or e.g. vitamin C.

This is achieved when using said casein based puffed products as inclusions in food products such as e.g. dry food products like cereal flakes or bars, chocolate or confectionery, or wet food products such as ice-creams, milk based desserts or chilled dairy products like yogurts, curds or fresh cheese. For example, a specific embodiment of the invention consists in combination a wet food product and a coated casein based puffed product which are stored separately within the same container, e.g. in a multi-chamber container, and mixed extemporaneously, just before consumption.

Depending on the technology which used, especially the way to perform extrusion of the casein based material, one can prepare puffed products, e.g. balls, pellets, granules, which comprise a liquid, semi-liquid or pasty filling inside the expanded matrix.

Further examples of use of these coated expanded casein stuffs are described hereafter

### Example 1: Preparation of a casein based puffed product according to the invention

83% acid casein are blended with 2.28% slacked lime powder and 14.72% water. The mix obtained is then extruded and expanded through an innovative concept of vacuum down stream the extrusion process to allow expansion of extruded products. A cutter is placed in a vacuum chamber to control expansion and cutting at the exit of the twin- screw extruder. The product is then transported under vacuum on a belt and discharged at ambient pressure via two exit sass. The casein based puffed product is dried to reduce the water content from 13-14% to 2-5%.

The die design will fit the diameter of the casein product targeted.

### Example 2: preparation of a coated casein based puffed product including nutritional ingredients

A casein puffed product is prepared as in example 1, except that it includes sensitive bioactive ingredients.

The additional nutritional elements are essentially determined according to their nature (vitamins, minerals, essential fatty acids), their nutritional value or in line with current food regulations.

It is then coated by the mean of coating technology, e.g. open pan, belt-coater, drum, fluid bed, disc spray, spray nozzles, bi-turbine, vacuum coating. The coating process is taking place in two steps. A first layer of fat based material layer (40 to 50% of the total weight) is applied onto the casein core (10% of the total weight). Then the layer is solidified by decreasing the temperature. A second layer of fat based material (40 to 50% of the total weight) is then applied onto the first layer. It is let to solidify by decreasing the temperature.

### Example 3: Yogurt containing crunchy coated nutritional casein-puffed

Coated nutritional casein puffed products are mixed in the yogurt mass at a temperature under 32°C or added in a yogurt mass just before consuming using a special packaging for storage as e.g. split pot.

### Example 4: Fresh cheese containing crunchy coated nutritional casein-puffed

Coated nutritional casein puffed products are mixed in the fresh cheese mass at a temperature under 32°C or added in a fresh cheese mass just before consuming using a special packaging for storage as e.g. split pot.

### Example 5: Dessert containing crunchy coated nutritional casein-puffed

Coated nutritional casein puffed products are mixed in the fresh dessert mass at a temperature under 32°C or added in a dessert mass just before consuming using a special packaging for storage as e.g. split pot.

## Claims

1. Casein based puffed product comprising a matrix made of extruded and expanded casein salt and additional nutritional elements which are dispersed throughout the matrix mass.

2. Casein based puffed product according to claim 1 wherein the casein salt is an alkali or alkaline earth metal salt like sodium caseinate or calcium caseinate.

3. Casein based puffed product according to any of claims 1 and 2 wherein the additional nutritional elements are selected form the group consisting of bioactive compounds such as vitamins, polyunsaturated fatty acids, essential oils, antioxidants or the like, or micronutrients like minerals and trace elements.

4. Casein based puffed product according to any of claims 1 to 3 wherein sensitive additional nutritional elements are protected against e.g. heat, moisture, oxidation or light by means of a suitable coating, in particular by means of a coating of the whole matrix mass.

5. Casein based puffed product according to claim 4 wherein the coating is a mono or multilayer fat based coating like a vegetal fat or chocolate or a natural or artificial wax based coating.

6. Casein based puffed product according to claim 5 wherein the coating further comprises additives like colorants, flavors, stabilizers or the like.

7. Casein based puffed product according to claim 5 wherein the external layer of the multilayer coating further comprises additives like colorants, flavors, stabilizers or the like.

8. A process for preparing casein puffed based products according to any of claims 1 to 7 which comprises the steps of:
- preparing a casein alkali or alkaline earth metal salt by dry mixing acidic casein with a source of alkali or alkaline earth metal;
- concomitantly or subsequently mixing selected additional nutritional elements with the above ingredients;
- subjecting the resulting mixture to extrusion in controlled heat and pressure conditions and in the presence of a controlled amount of water;
- subjecting the resulting extruded mass to expansion;
- subjecting the resulting extruded mass to drying and if necessary, to a coating operation.

9. Process according to claim 8 wherein acidic casein has a pH of about 4.6 and that the extrusion in presence of the alkali or alkaline earth metal salt is performed while applying pH and heat conditions sufficient to plasticize casein, namely at a pH of about 5.2 to 5.6 and at a temperature comprised between about 30 and 100°C preferably at a temperature of about 60 to 70 °C.

10. Process according to claims 8 and 9 wherein the extrusion is performed in the presence of an amount of water sufficient to afford a dry matter content of about 80 to 90 % of the resulting extruded product.

11. Process according to any of claims 8 to 10 wherein the expanded and subsequently expanded mass is broken, sliced or ground into smaller portions or pieces.

12. Process according to any of claims 8 to 11 wherein the drying step is carried out using a fluidized bed and is performed in order to obtain a final dry matter of about 92-97 %.

13. Process according to any of claims 8 to 12 wherein the coating operation is performed in two subsequent steps, the first one comprising the use of a first fat based material and the second step comprising a further coating using the same fat based material or a distinct material, e.g. chocolate, natural or artificial wax.

14. Process according to claim 13 wherein the second step of the coating operation enables the addition of further additives like colorants, flavors, stabilizers or the like.

15. A casein puffed product according to any of claims 1 to 7 obtainable by means of the process according to any of claims 8 to 14.

16. The use of casein puffed products according to any of claims 1 to 7 and 15 as inclusions in food products such as dry food products like cereal flakes or bars, chocolate or confectionery, or wet food products such as ice-creams, milk based desserts or chilled dairy products like yogurts, curds or fresh cheese.

17. The use according to claim 17 wherein the food product is a wet food product and wherein casein based puffed products are coated products.

18. The use according to claim 17 wherein the wet food product and the coated casein based puffed product are stored separately within the same container and mixed extemporaneously, just before consumption.

19. The use of casein based food products according to any of claims 1 to 7 and 15 as mean or support for providing or delivering additional nutritional elements within food products.

20. A food product which comprises as inclusions casein based puffed products according to any of claims 1 to 7 and 15.
